# EUROPEAN PATENT APPLICATION

(11) **EP 4 559 582 A1**
(43) Date of publication of application: **28.05.2025**
(21) Application number: 23842990.6
(22) Date of filing: 19.07.2023
(51) Int. Cl.: B05B 9/04, A23L 9/20, B65D 83/14, A23L 2/00, A23L 2/02, A23L 2/40, A23L 5/00, B05B 11/04

(54) **PRESSURE ACCUMULATION-TYPE DISCHARGE PRODUCT AND METHOD FOR PRODUCING SAME**

(30) Priority: 22.07.2022 JP 2022117294
(71) Applicant: Lumica Corporation, Koga-shi, Fukuoka 811-3136 (JP)
(72) Inventor: TADA, Akira, Koga-shi, Fukuoka 811-3136 (JP); FUKUSHIMA, Hiroshi, Koga-shi, Fukuoka 811-3136 (JP)
(74) Representative: Winter, Brandl - Partnerschaft mbB
(86) International application number: PCT/JP2023/026346
(87) International publication number: WO 2024/019067

(57) **Abstract**

Provided are a novel pressure accumulation-type discharge product that makes it possible to easily obtain a foamed food, and the like. A pressure accumulation-type discharge product (101) for a foamed food, comprising: a first inner pouch (21) having a first fluid food and a foaming component that is nitrous oxide and/or carbon dioxide accommodated therein; a can (31) having the first inner pouch (21) accommodated therein; a pressurized gas accommodated around the first inner pouch (21) inside the can (31); and a discharge unit (5) for discharging what is accommodated in the first inner pouch (31). As the first fluid food, one using honey, fruit juice, fruit sauce, dressing, fresh milk, soy milk, oil, soy sauce, sauce, vinegar, a beverage, or the like can be used.

## Description

### Technical Field

The present invention relates to a pressure accumulation-type discharge product that supplies a foamed food. In addition, the present invention relates to a method for producing a pressure accumulation-type discharge product that supplies a foamed food.

### Background Art

From the viewpoint of palatability, foods are also often required to come in a variety of forms and tastes. A foamed food, also called cream or whip, is also used as one of the food forms. A foamed food often allows a gas for creating the foam thereof to escape easily, and is generally often whipped at the time of use with a whisk or the like and used. This whipping process is time-consuming, and in the case of a seasoning or the like, a small amount thereof is often sufficient, and there is a demand for easy access to a foamed food.

A technology using aerosol has been disclosed as one that provides such a food. For example, Patent Literature 1 discloses a palatable food contained in an aerosol container, characterized by filling the aerosol container with a viscous food material having a foaming property together with a propellant gas under pressure.

### Citation List

### Patent Literature

Patent Literature 1: Japanese Patent Laid-Open No. 3-61450

### Summary of Invention

### Technical Problem

As in Patent Literature 1, a foamed aerosol composition or the like is known. However, as such an aerosol composition is used, the foaming gas that also functions as a propellant is consumed, and thus the internal pressure thereof decreases. Then, at the final stage, when the amount remaining in the can is low, the aerosol composition often becomes liquid and easily runny, and comes into a non-foamed state. In addition, a large amount of a gas, which is also a propellant, needs to be included in order to maintain the internal pressure, the so-called overrun, which indicates the gas content of the foam, is high, only foam that is too soft can be provided, and only a food that can withstand such overrun can be used, and so on, and thus the design flexibility is also limited.

Under such circumstances, an object of the present invention is to provide a novel pressure accumulation-type discharge product that makes it possible to easily obtain a foamed food, and the like.

### Solution to Problem

The present inventor has carried out diligent studies in order to solve the above problem, and as a result, found that the following inventions meet the above object and completed the present invention. That is, the present invention relates to the following inventions.
<1> A pressure accumulation-type discharge product for a foamed food, comprising:
   a first inner pouch having a mixture comprising a first fluid food and a foaming component that is nitrous oxide and/or carbon dioxide accommodated therein;
   a can having the first inner pouch accommodated therein;
   a pressurized gas accommodated around the first inner pouch inside the can; and
   a discharge unit for discharging what is accommodated in the first inner pouch.
<2> The pressure accumulation-type discharge product, wherein the can comprises inside itself a second inner pouch independent of the first inner pouch and having a second fluid food accommodated therein, and
   the discharge unit discharges what is accommodated in the first inner pouch and what is accommodated in the second inner pouch.
<3> The pressure accumulation-type discharge product, wherein an amount of the foaming component mixed inside the first inner pouch is 8 times or less an amount of the nitrous oxide and/or the carbon dioxide dissolved to saturation in the first fluid food at an air temperature of 25°C and a pressure of 0.1 MPa.
<4> The pressure accumulation-type discharge product, wherein the amount of the foaming component mixed inside the first inner pouch is 2 to 5 times the amount of the nitrous oxide and/or the carbon dioxide dissolved to saturation in the fluid food at an air temperature of 25°C and a pressure of 0.1 MPa.
<5> The pressure accumulation-type discharge product, wherein the first fluid food comprises an alcoholic beverage.
<6> A method for producing a pressure accumulation-type discharge product for a foamed food, the discharge product comprising a first inner pouch having a first fluid food accommodated therein and a can having the first inner pouch accommodated therein, and the method comprising:
   a step of accommodating a pressurized gas around the first inner pouch inside the can;
   a step of accommodating a fluid food in the first inner pouch; and
   a step of accommodating a foaming component that is nitrous oxide and/or carbon dioxide after accommodating the fluid food in the first inner pouch.
<7> The production method, wherein the step of accommodating a foaming component is sending out an amount of the foaming component to be accommodated by using a cylinder to accommodate the same in the first inner pouch.
<8> The production method, wherein the method comprises a step of shaking the can after accommodating the foaming component.

### Advantageous Effect of Invention

According to the pressure accumulation-type discharge product of the present invention, a foamed food can be easily obtained.

### Brief Description of Drawings

[Figure 1] Figure 1 is a schematic diagram based on a first embodiment of the pressure accumulation-type discharge product of the present invention.
[Figure 2] Figure 2 is a schematic diagram based on a second embodiment of the pressure accumulation-type discharge product of the present invention.
[Figure 3] Figure 3 is a flow diagram showing a production flow of the pressure accumulation-type discharge product of the present invention.
[Figure 4] Figure 4 is images of a foamed food according to Example 1.
[Figure 5] Figure 5 is images of a foamed food according to Comparative Example 1.
[Figure 6] Figure 6 is images of a foamed food according to Example 2.
[Figure 7] Figure 7 is images of a foamed food according to Comparative Example 2.
[Figure 8] Figure 8 is images of foamed foods according to Example 3.

### Description of Embodiments

Hereinafter, embodiments of the present invention will be described in detail, and the description of a constituent element described below is an example (representative example) of an embodiment of the present invention, and the present invention is not limited to the following contents unless the subject matter thereof is changed. Herein, when the expression "to" is used to describe a range of values, the expression is used as an expression including the numerical values before and after "to".

### [Pressure accumulation-type discharge product of present invention]

The pressure accumulation-type discharge product of the present invention includes: a first inner pouch having a mixture including a first fluid food and a foaming component that is nitrous oxide and/or carbon dioxide accommodated therein; a can having the first inner pouch accommodated therein; a pressurized gas accommodated around the first inner pouch inside the can; and a discharge unit for discharging what is accommodated in the first inner pouch. By using the pressure accumulation-type discharge product of the present invention, a foamed food can be easily obtained.

### [Production method of present invention]

The production method of the present invention is a method for producing a pressure accumulation-type discharge product for a foamed food, the discharge product comprising a first inner pouch having a first fluid food accommodated therein and a can having the first inner pouch accommodated therein, and includes: a step of accommodating a pressurized gas around the first inner pouch inside the can; a step of accommodating a fluid food in the first inner pouch; and a step of accommodating a foaming component that is nitrous oxide and/or carbon dioxide after accommodating the fluid food in the first inner pouch. According to the production method of the present invention, it is possible to efficiently produce the pressure accumulation-type discharge product of the present invention, which makes it possible to easily obtain a foamed food.

In the present application, the pressure accumulation-type discharge product of the present invention can also be obtained by the production method of the present invention, and in the present application, the respective corresponding configurations thereof can be used mutually.

### [Pressure accumulation-type discharge product 101]

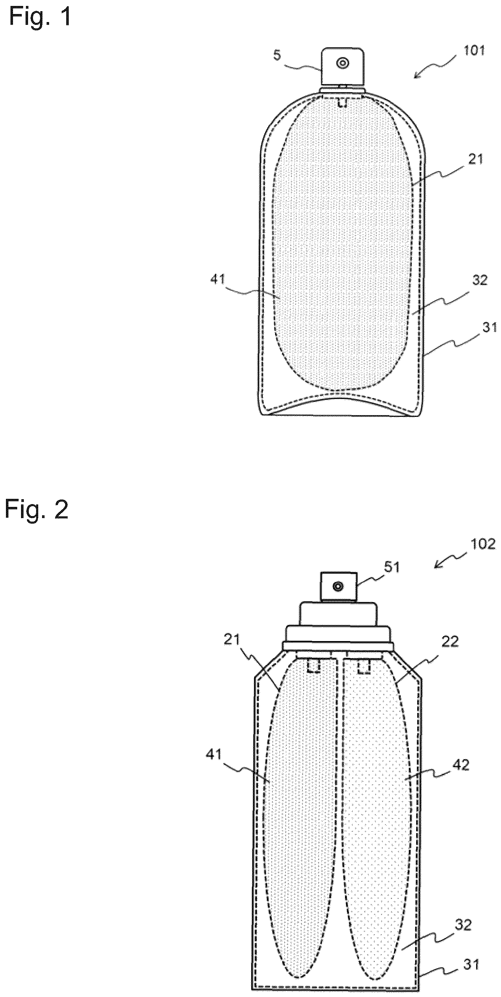

Figure 1 is a schematic diagram based on a first embodiment of the pressure accumulation-type discharge product of the present invention. A pressure accumulation-type discharge product 101 has a first inner pouch 21 in which a food disposed inside a can 31 is accommodated. A foamed food obtained by foaming the food accommodated in the first inner pouch 21 can be discharged by operating a discharge unit 5 of an upper actuator when the pressure accumulation-type discharge product is used.

### [Can 31]

The can 31 is a can having the first inner pouch 21 accommodated therein. The can 31 is a can having pressure resistance against a pressurized gas and having airtightness. As the can 31, a metal can such as an aluminum can, or the like can be used. The first inner pouch 21, a pressurized gas, and the like are accommodated inside the can 31. In addition, a valve, an actuator, or the like for discharging what is accommodated can be attached to the can 31.

### [Pressurized gas]

A pressurized gas is accommodated in a space 32 between the can 31 and the first inner pouch 21 inside the can 31. The pressurized gas is, for example, air or nitrogen gas. The pressure inside the can can be about 0.2 MPa to 2.0 MPa, about 0.2 to 1.8 MPa, about 0.3 to 1.3 MPa, about 0.5 MPa to 1.0 MPa, or about 0.6 to 0.8 MPa as the pressure at a normal temperature of 25°C.

The first inner pouch 21 is connected to the discharge unit 5 outside the can 31 via an injection port. When the pressure accumulation-type discharge product 101 is used, a first fluid food mixed with a foaming component is discharged in the form of foam by pressing the actuator.

### [First inner pouch 21]

The first inner pouch 21 is a container that accommodates a mixture 41 of the first fluid food and the foaming component. The first inner pouch 21 is a pouch that is resistant to the first fluid food and the like to be accommodated. The first inner pouch 21 also has airtightness that separates the same from the pressurized gas in the space 32. As this pouch, for example, a pouch having flexibility obtained by forming a sheet prepared by subjecting a thin film of a thermoplastic resin to aluminum vapor deposition in order to improve airtightness, solvent resistance, or the like can be used.

### [First fluid food]

The first fluid food can be, as a subject, any food having fluidity that is intended to be provided in the form of foam. Examples of the food that can be used include honey, fruit juice, fruit sauce, dressing, fresh milk, soy milk, oil, soy sauce, sauce, vinegar, and a beverage.

Various foods in a fluid state can be used as raw materials for a mixture or the like. For example, the subject thereof may be a substance that has been conventionally processed into the form of foam. In addition, in order to provide a new taste or texture, the subject thereof may be a substance that is fluid at normal temperature, such as a liquid or a paste, which has not been conventionally in the form of foam. For example, water, vinegar, oil, a dairy product, a seasoning, a beverage, fruit juice, honey, dressing, soup, or a mixture thereof can be used. As the beverage, various teas, coffee, cocoa, a soft drink, a fruit juice beverage, a carbonated beverage, an alcoholic beverage (alcoholic drink), milk, soy milk, or the like can also be used.

Examples of the alcoholic beverage that can be used include a sparkling alcoholic beverage, a brewed alcoholic beverage, a distilled alcoholic beverage, and a mixed alcoholic beverage. The alcoholic beverage is a beverage containing ethanol and is also called an alcoholic drink, and for example, a beverage having an alcohol content of 1% or more can be used. Specific examples of the alcoholic beverage that can be used include sake, synthetic sake, continuous distillation shochu, single distillation shochu, mirin, beer, fruit wine, sweet fruit wine, whisky, brandy, material alcohol, sparkling liquor, other brewed liquors, spirit, liqueur, powder liquor, and miscellaneous liquors.

When a base having no fluidity or a base having low fluidity is used as the base of the first fluid food, fluidity may be imparted by mixing a medium appropriately. In addition, a solid food can also be used by being processed into the form of a powder, a paste, a smoothie, or a juice, being mixed with a medium, and so on. Examples of the medium that can be used include water, oil, vinegar, alcohol, and a mixture thereof.

In addition, when using a food that contains few components that contribute as a surfactant and the like and that produces an unstable foam shape when foamed, a foaming aid may be mixed appropriately. Examples of the aid that can be used include a thickener and a surfactant (lecithin, gelatin, or the like). Thereby, even a food that is generally difficult to foam can be made into a foamed food.

### [Foaming component]

The first inner pouch 21 has a mixture of a first fluid food and a foaming component that is nitrous oxide and/or carbon dioxide accommodated therein. Nitrous oxide and carbon dioxide are both components that can be used for food, and a foamed food using these can be eaten as is.

### [Amount dissolved]

The amount of the foaming component dissolved in the first inner pouch 21 can be set appropriately depending on the component used, the degree of whipping when used, and the like. The amount dissolved can be determined based on the amount of each component dissolved to saturation at about normal temperature and normal pressure, assuming that the food is in use. Even if the amount dissolved is less than the amount dissolved to saturation, a slightly foamed state can also be created by releasing the pressure at the time of discharge from the pressure accumulation-type discharge product. In addition, when a well-foamed food is provided, a larger amount of the component may be dissolved.

The amount of the foaming component mixed inside the first inner pouch 21 may be set based on the amount of nitrous oxide and/or carbon dioxide (carbon dioxide gas) dissolved to saturation in the fluid food at an air temperature of 25°C and a pressure of 0.1 MPa (hereinafter referred to as the "amount dissolved to saturation at normal temperature and normal pressure"). The upper limit of the amount of the foaming component mixed can be 20 times or less, 10 times or less, 8 times or less, or 7 times or less the amount dissolved to saturation at normal temperature and normal pressure. In addition, this upper limit is more preferably 6 times or less, 5 times or less, or 4 times or less the amount dissolved to saturation at normal temperature and normal pressure. The lower limit of the amount of the foaming component mixed is preferably 0.5 times or more, 1 time or more, 1.5 times or more, 2 times or more, or 2.5 times or more the amount dissolved to saturation at normal temperature and normal pressure. Such a foamed food has small overrun and has dense and high quality foam.

The amount of a foaming component such as nitrous oxide or carbon dioxide dissolved to saturation in the fluid food at a predetermined temperature and pressure can be measured from the change in weight between before and after dissolution resulting from sufficiently contacting the foaming component whose amount dissolved to saturation is to be measured by bubbling or the like. The predetermined temperature and pressure can be determined based on the amount dissolved to saturation at a temperature equivalent to normal temperature (air temperature of 25°C) and a pressure equivalent to atmospheric pressure (pressure of 0.1 MPa), which serves as a guide when using, storing, and transporting the pressure accumulation-type discharge product.

For example, the foaming component in an amount that is about 2 to 5 times the amount dissolved to saturation at normal temperature and normal pressure is dissolved in the fluid food inside the first inner pouch 21 inside the can under pressure. This makes it possible to provide a foamed food having a particularly excellent foam texture when discharged. In particular, such an amount dissolved to saturation can be achieved because the pressurized gas for discharge and the first inner pouch 21 are independent inside the can 31, and in general, this amount dissolved to saturation is achieved by adjusting the pressure inside the first inner pouch 21 separately from the pressure caused by the pressurized gas.

In addition, the amount of the foaming component dissolved may be within the following range. For example, the solubility (amount dissolved to saturation) of nitrous oxide (N₂O) in water at 25°C and atmospheric pressure (about 0.1 MPa) is about 1.2 g/L. When this amount dissolved to saturation is exceeded, whipping is likely to occur. When the foamed food is made easy to feel elastic and whipped, the overrun, which serves as a guide for the amount of gas contained in the foam, can be set at about 50 to 200% as a guide. When considering the elasticity and the whipping of such a foamed food, the above particularly preferable content of nitrous oxide in the first fluid food is 2.0 g/L to 6.0 g/L. This is a range providing the amount dissolved to saturation at approximately 0.2 MPa to 0.5 MPa.

The foaming component inside the first inner pouch 21 can be nitrous oxide. When nitrous oxide is used, the amount of nitrous oxide mixed relative to the amount of the first fluid food inside the first inner pouch (mass of nitrous oxide/volume of first fluid food) can be, for example, about 0.2 g/L to 24 g/L. In particular, when the first fluid food includes water as a main component, the amount of nitrous oxide mixed is preferably 2.0 g/L to 6.0 g/L. In addition, for example, the amount of nitrous oxide mixed may be further preferably in a range of 2.5 g/L to 5.0 g/L.

In the case of the conventional technology using aerosol, in order to discharge the accommodated food, a foaming component needs to be mixed into the can in such a way as to apply an initial pressure of about 0.7 to 1.0 MPa. However, if the food is discharged while including such an amount of the foaming component, the overrun is too high and thus only soft and non-elastic foam can be obtained. On the other hand, if the pressure is lowered, the discharge itself becomes difficult. On the other hand, the pressure accumulation-type discharge product of the present invention enables discharge by using the pressurized gas inside the can, and thus can also supply foam that is difficult to achieve with the technology using aerosol.

When carbon dioxide is used, the amount of carbon dioxide mixed relative to the amount of the first fluid food inside the first inner pouch (mass of carbon dioxide/volume of first fluid food) can be, for example, about 0.25 g/L to 25 g/L. In particular, the amount of carbon dioxide mixed is preferably 2.5 g/L to 7.0 g/L. In addition, for example, the amount of carbon dioxide mixed may be further preferably in a range of 3.0 g/L to 6.0 g/L.

### [Discharge unit 5]

The discharge unit 5 is a section for discharging what is accommodated in the first inner pouch. This discharge unit can appropriately adopt a structure used in a bag-on-valve. The discharge unit 5 can use an actuator having a structure such that when the unit is pushed down in the direction of the can 31, a valve opens and what is accommodated in the first inner pouch is selectively discharged from an opening portion of the discharge unit 5.

### [Characteristics of pressure accumulation-type discharge product of present invention]

The pressure accumulation-type discharge product of the present invention discharges a food in the form of foam. On the other hand, during storage, the food is shielded from air and light by the can or the inner pouch. In addition, during use, the food is unilaterally discharged from the discharge unit, and air does not flow back into the inner pouch or the like. In addition, a bacterium or the like is unlikely to enter the discharge product, and the discharge product is insusceptible to contamination or the like. Because of this, the food has extremely little opportunity to come into contact with air during use or storage. Therefore, oxidation caused by air and degradation caused by light can be prevented.

Because of this, the taste, the aroma, and the nature of the foamed food accommodated in the pressure accumulation-type discharge product are unlikely to change over a long period of time, and the quality thereof can be maintained. Furthermore, the pressure accumulation-type discharge product does not cause leakage when stored and is easy to carry. Because of this, it is possible to easily add foam having an adjusted taste, aroma, or nature even in various environments such as a kitchen and a dining table. In addition, the component for foaming and the gas for discharging are separated, and thus the food having stable quality can be discharged during use, from the beginning of use, also called the first shot, to the final stage, when the amount accommodated has been discharged completely.

### [Pressure accumulation-type discharge product 102]

Figure 2 is a schematic diagram based on a second embodiment of the pressure accumulation-type discharge product of the present invention. The pressure accumulation-type discharge product 102 is an application example of the pressure accumulation-type discharge product 101. Here, the pressure accumulation-type discharge product 102 further has a second inner pouch 22, in addition to the configuration of the pressure accumulation-type discharge product 101. A second fluid food 42 is accommodated in the second inner pouch 22. In addition, in order to use the second inner pouch 22, a discharge unit 51 adopts a configuration that can mix and discharge the component in each inner pouch.

The second inner pouch 22 is accommodated inside the can 31 independently of the first inner pouch 21. In addition, the second fluid food 42 is accommodated in the second inner pouch 22. The discharge unit 51 can discharge what is accommodated in the first inner pouch 21 and what is accommodated in the second inner pouch 22.

The pressure accumulation-type discharge product 102 can discharge what is accommodated in each inner pouch. What is inside the second inner pouch 22 may be similar to those described above as examples as what is accommodated in the first inner pouch 21, and the both may be intended to discharge a foamed food. In addition, what is inside the second inner pouch 22 is not intended to be a foamed food, but may be intended to remain liquid or the like to add another flavor to what is accommodated in the first inner pouch 21. When what is accommodated in each of these inner pouches is discharged, the contents of the both may be mixed inside the discharge unit 51 and discharged, or may be discharged together in a combined manner while remaining separated.

The pressure accumulation-type discharge product of the present invention may be produced by any method that can produce the same. For example, a foaming mixture including a fluid food and a foaming component to be accommodated in the first inner pouch 21 is prepared and stored in a pressurized container or the like in advance. Then, after a bag-on-valve type container is filled with a pressurized gas, the foaming mixture described above can be placed in the first inner pouch 21. Alternatively, a pressurized gas, a fluid food, and a foaming component may each independently be accommodated.

### [Production flow example]

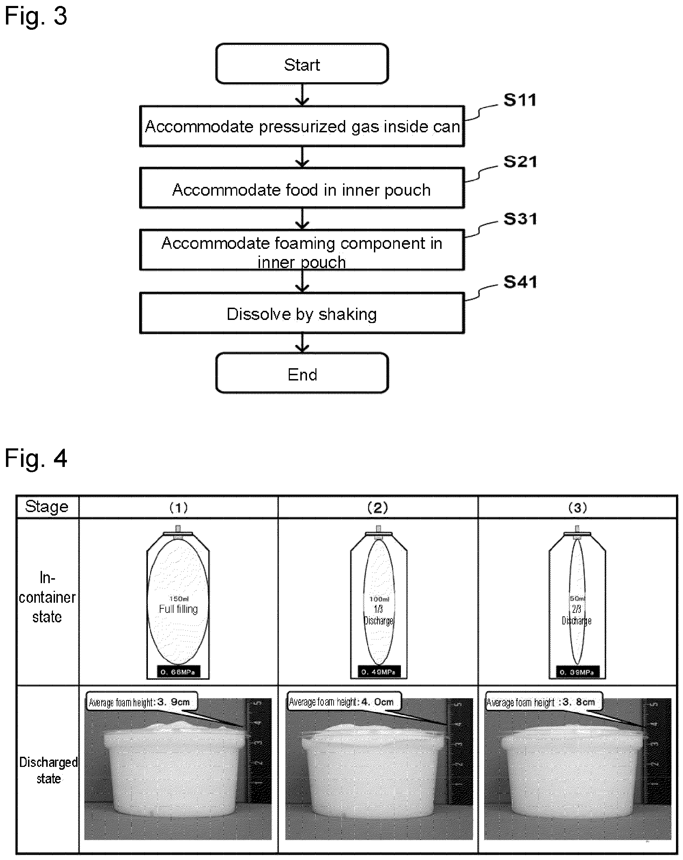

Figure 3 is a flow diagram showing a preferable production flow of the pressure accumulation-type discharge product of the present invention.

Step S11 is a step of accommodating a pressurized gas between a can and a first inner pouch after the first inner pouch is disposed inside the can.

Step S21 is a step of accommodating a fluid food in the first inner pouch after step S11.

Step S31 is a step of accommodating a foaming component such as nitrous oxide or carbon dioxide in the first inner pouch after step S21.

Step S41 is a step of dissolving nitrous oxide or carbon dioxide in the food inside the first inner pouch by shaking the entire can after step S31.

This production flow is an example of a method for producing a pressure accumulation-type discharge product for a foamed food using a container having a first inner pouch having a first fluid food accommodated therein and a can having the first inner pouch accommodated therein.

In the pressure accumulation-type discharge product, a sufficient pressurized gas is accommodated between the can and the first inner pouch to maintain the pressure at or above a predetermined level, in order to discharge the accommodated components. For this purpose, first, a sufficient pressurized gas is accommodated. Then, first, only a food is accommodated in the first inner pouch. If the food and a foaming component are mixed in advance, the food may foam during storage before accommodation or during transportation, requiring a high degree of temperature control and pressure control, which may make production control difficult. Because of this, first, only a food that is stable and fluid even at normal temperature is accommodated. After that, a foaming component is placed, and the food and the foaming component are mixed in a can that is under high pressure thereby, to a dissolved state thereof under pressure.

The step of accommodating a foaming component is preferably sending out a foaming component by using a cylinder to accommodate the foaming component in an amount to be accommodated in the first inner pouch. When a foaming component is accommodated, it may be generally difficult to place the foaming component in the can because the pressurized gas and the food in the first inner pouch are already included inside the can. In addition, the pressure created by the pressurized gas inside the can is higher than the pressure that is to be achieved inside the first inner pouch, and thus it may be even more difficult to place the foaming component and also control the amount thereof required. Because of these, when a foaming component is fed, the amount of the foaming component required is weighed into the cylinder and fed, which also makes the operation easier and also makes it possible to control the amount of the foaming component to be mixed, with excellent precision.

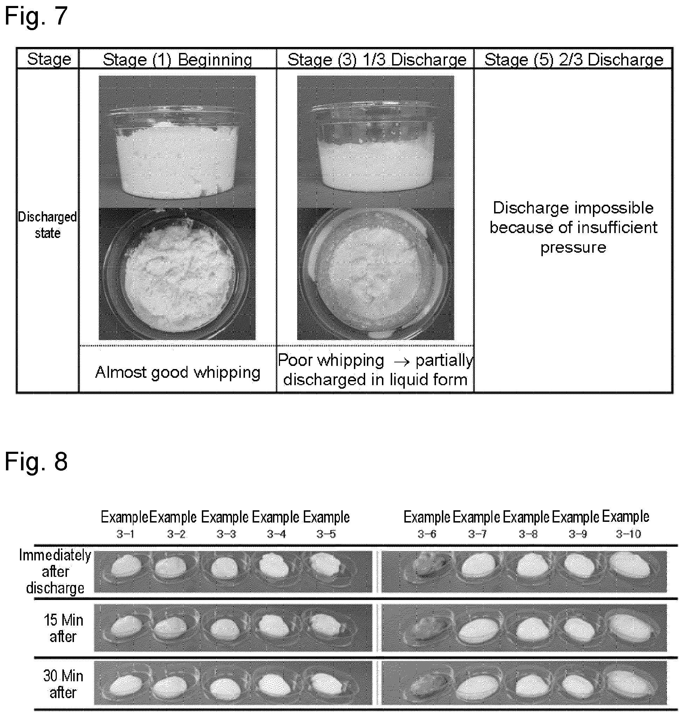

The production flow can include a step of shaking the can after the foaming component is accommodated. After the foaming component is placed, the food and the foaming component are mixed inside the first inner pouch after a certain period of time has passed. However, even under pressure, the food and the foaming component may be difficult to mix because these are the liquid and the gas that far exceed their respective amounts dissolved to saturation at normal temperature and normal pressure. Because of this, these are preferably shaken and diffused inside the container. By shaking, the gas from the foaming component present in the headspace or the like can be efficiently mixed into the fluid food inside the first inner pouch inside the can. This shaking may be, for example, any physical shaking such as shaking the can, and shaking laterally is efficient. It is considered that a turbulent flow is caused by a lateral force and gravity. Shaking in a figure 8 shape is preferable. In addition, ultrasonic vibration or the like may be adopted.

### Examples

Hereinafter, the present invention will be described in more detail with reference to Examples, but the present invention is not limited to the following Examples unless the subject matter thereof is changed.

### [Example 1 and Comparative Example 1] Yuzu fruit juice

### 1.1 Production of pressure accumulation-type discharge product

### (1) Preparation of fluid food

46% by mass of yuzu fruit juice (commercial product), 46% by mass of water, and 8% by mass of a gelling agent were mixed to prepare a fluid food (1). The gelling agent is the food additive gelling agent "Proespuma COLD".

(2) The fluid food (1) was used to produce the following pressure accumulation-type discharge products.

### (2-1) Example 1

A bag-on-valve container for container: 53 mm diameter × 165 mm and pouch: 150 mL was used to produce a pressure accumulation-type discharge product of Example 1.

The pouch inside a can precharged with nitrogen gas as a pressurized gas was filled with 150 mL of the fluid food (1). Next, filling with 1.05 g (about 7.7 times the amount dissolved to saturation [under 0.1 MPa]) of nitrous oxide from the stem was carried out followed by shaking to dissolve the liquid food (1) and nitrous oxide. The filling quantity of nitrous oxide was evaluated from the difference in total weight between before and after filling.

The amount of the fluid food (1) dissolved to saturation at 25°C under atmospheric pressure (0.1 MPa) was measured based on the mass difference between before and after dissolution due to bubbling of nitrous oxide gas. The amount dissolved to saturation at 25°C under atmospheric pressure (0.1 MPa) was 0.91 g/L (0.137 g per 150 mL).

### (2-2) Comparative Example 1

An aerosol can was used to produce a product of Comparative Example 1. An empty container of container: 53 mm diameter × 165 mm was filled with 150 mL of the fluid food (1), then a valve was placed on the container, and vacuum clinching was carried out. After that, equilibrium filling with nitrous oxide from the stem was carried out at 0.67 MPa (gauge pressure).

### 1.2 Evaluation method

The products of Example 1 and Comparative Example 1 were evaluated for the state of foam when discharged.
Stage (1): With an unused product, the internal pressure was measured, then 20 g of the contents was discharged into a cup, and the state thereof was observed.
Stage (2): 30 g (a total of 50 g from the initial filling quantity; about 1/3 of the filling quantity) of the fluid food accommodated was discharged, then the internal pressure was measured, and further, 20 g of the fluid food was discharged into a cup, and the state thereof was observed.
Stage (3): 30 g (a total of 100 g from the initial filling quantity; about 2/3 of the filling quantity) of the fluid food accommodated was discharged, then the internal pressure was measured, and further, 20 g of the fluid food was discharged into a cup, and the state thereof was observed.

The cups used for these evaluations are made of a transparent plastic, and have an upper opening portion of 64 mmφ × a bottom surface of 51 mmφ × a height of 35 mm and a capacity of 80 mL.

### 1.3 Results

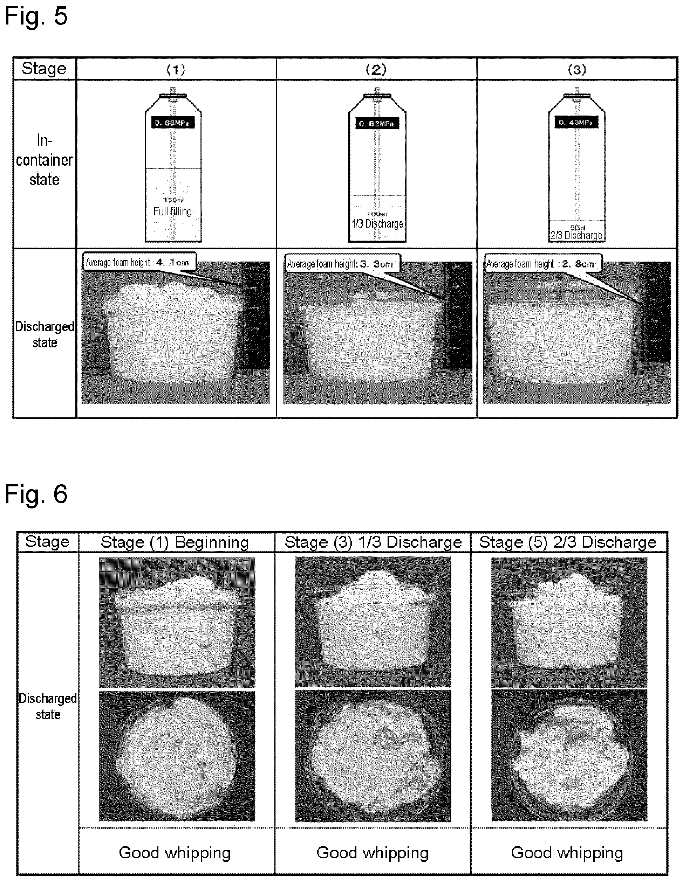

Figure 4 is images of the foamed food when Example 1 was evaluated. Figure 5 is images of the foamed food according to Comparative Example 1. The in-container states in the upper row of each figure are schematic diagrams showing the states inside the container. The discharged states in the lower row of each figure are photographs of the foamed food taken immediately after discharging.

In the pressure accumulation-type discharge product according to Example 1, there was little change in the texture of the discharged foam from the initial discharge stage (1) to the final discharge stage (3), and the foam texture was maintained. On the other hand, in the product of Comparative Example 1, which corresponds to a general aerosol can, the overrun decreased and the foam texture also changed greatly as the fluid food was discharged.

Example 1 and Comparative Example 1 are experiments involving comparison with a prepared liquid of yuzu fruit juice as the contents at nitrous oxide internal pressure (equivalent pressure): 0.67 MPa. In Example 1, even when 1/3 or 2/3 of the filling quantity was discharged from the beginning, the properties of the foam were almost constant, and foam having a robust foam texture was obtained. On the other hand, in Comparative Example 1, which is a regular aerosol can, foam having a robust foam texture similar to that of Example 1 was obtained at the beginning, but as the filled quantity was discharged to 1/3 and to 2/3, the foam texture became coarser, and the foam also became less elastic. In Example 1, this is because the amount of nitrous oxide dissolved in the contents did not change until the end. On the other hand, in Comparative Example 1, this is because as the contents were discharged, the headspace increased, and the internal pressure decreased, and accordingly, the amount of nitrous oxide dissolved in the contents decreased, and thus the foaming power when discharged weakened.

[Example 2 and Comparative Example 2] Whipped cream 2.1 Production of pressure accumulation-type discharge product 1) Sample

### Contents: "Whip" manufactured by Megmilk Snow Brand Co., Ltd., degree of whipping: medium

### 2) Filling

### (1) Example 2

Container: 53 mm diameter × 165 mm and pouch: 150 mL were used to produce a pressure accumulation-type discharge product of Example 2. The pouch inside a bag-on-valve type precharged can was filled with 150 mL of the contents. Next, 2.4 g (about 4 times the amount dissolved to saturation [under 0.1 MPa]) of nitrous oxide was added from the stem and then dissolved in the contents by shaking.

### (2) Comparative Example 2

Container: 53 mm diameter × 165 mm was used to produce a product of Comparative Example 2. An empty container was filled with 223 mL (70% of the full filling (equivalent to the loading volume of a general aerosol product)) of the contents, a valve was placed on the container and vacuum clinching was carried out. Equilibrium filling with nitrous oxide from the stem was carried out at 0.3 MPa (gauge pressure) = 0.4 MPa (absolute pressure).

### 2.2 Test method

Stage (1): With an unused sample, 20 g of the contents was discharged into a cup, and the state thereof was observed.
Stage (2): The contents were discharged until 2/3 of the filling quantity remained.
Stage (3): 20 g of the contents was discharged into a cup, and the state thereof was observed.
Stage (4): The contents were discharged until 1/3 of the filling quantity remained.
Stage (5): 20 g of the contents was discharged into a cup, and the state thereof was observed.

The cups used for these evaluations are made of a transparent plastic, and have an upper opening portion of 64 mmφ × a bottom surface of 51 mmφ × a height of 35 mm and a capacity of 80 mL.

### 2.3 Results

Figure 6 is images of the foamed food according to Example 2. Figure 7 is images of the foamed food according to Comparative Example 2. In Example 2, the texture of the discharged foam was almost unchanged from the beginning of the stage (1) to the discharge of 2/3 of the filling quantity in the stage (5). On the other hand, in Comparative Example 2, the foam texture deteriorated remarkably at a stage where 1/3 of the filling quantity was discharged in the stage (3), and the contents were partially discharged in liquid form. Furthermore, because of insufficient pressure, discharge became impossible before reaching a stage where 2/3 of the filling quantity was discharged in the stage (5).

In Example 2 and Comparative Example 2, the test was carried out with fresh cream as the contents and with nitrous oxide internal pressure (equivalent pressure): 0.3 MPa. In this experiment, the nitrous oxide internal pressure and the dissolution equivalent pressure were set to low pressures at which Comparative Example 2, which is an aerosol can, was unable to sufficiently discharge the contents, in order to suppress overrun. The filling quantity was 150 mL in Example 2 and 223 mL (70% of the overflow capacity) in Comparative Example 2, both of which were volumes designed based on the can capacity. The texture of the discharged foam was as follows.

In Example 2, even from the beginning of discharge to the discharge of 1/3 of the filling quantity or 2/3 of the filling quantity, the properties of the foam were almost constant, and foam having a slightly hard and good foam texture was obtained.

On the other hand, in Comparative Example 2, foam having a slightly hard texture was obtained almost as in Example 2 at the beginning, but when 1/3 of the filling quantity was discharged, the foam collapsed greatly and partially became liquid. Furthermore, when the discharge was continued, the discharge itself became impossible before 2/3 was discharged.

In Example 2, this is because the amount of nitrous oxide dissolved in the contents did not change until the end. On the other hand, in Comparative Example 2, as the contents are discharged, the headspace increases and the internal pressure decreases, and accordingly, the amount of nitrous oxide dissolved in the contents decreases, and thus the foaming power when discharged weakens. In addition, it is considered that because the originally set pressure was low, the foaming power was insufficient, and part of the contents was not formed into foam and was discharged in liquid form. Furthermore, it is considered that as the discharge was continued, the internal pressure continued to decrease, and finally, the internal pressure became insufficient, making the discharge impossible.

### [Example 3] Alcoholic beverages

Instead of the yuzu fruit juice of Example 1, the following alcoholic beverages of Example 3-1 to Example 3-10 were used to produce pressure accumulation-type discharge products.
Example 3-1: Whiskey
Example 3-2: Brandy
Example 3-3: Shaoxing wine
Example 3-4: Sake
Example 3-5: Ume liqueur
Example 3-6: Red wine
Example 3-7: Sparkling wine
Example 3-8: White Curacao
Example 3-9: Peach liqueur
Example 3-10: Lemon sour

Evaluation results of Example 3-1 to Example 3-10 are shown in Figure 8. Figure 8 is images showing the states of the foamed alcoholic foods immediately after discharge, 15 minutes after discharge, and 30 minutes after discharge from the pressure accumulation-type discharge product of Example 3. It has been confirmed that a foamed food using an alcoholic beverage (alcoholic drink) can be provided, the foamed food maintains the flavor of the alcoholic beverage used as a raw material for the mixture and has an excellent flavor, and such foam is stable for a long time.

### Industrial Applicability

The present invention can be used in a food and is industrially useful.

### Reference Signs List

101, 102 Pressure accumulation-type discharge product
21 First inner pouch
22 Second inner pouch
31 Can
41 Mixture
42 Second fluid food
5, 51 Discharge unit

## Claims

1. A pressure accumulation-type discharge product for a foamed food, comprising:
a first inner pouch having a mixture comprising a first fluid food and a foaming component that is nitrous oxide and/or carbon dioxide accommodated therein;
a can having the first inner pouch accommodated therein;
a pressurized gas accommodated around the first inner pouch inside the can; and
a discharge unit for discharging what is accommodated in the first inner pouch.

2. The pressure accumulation-type discharge product according to claim 1, wherein the can comprises inside itself a second inner pouch independent of the first inner pouch and having a second fluid food accommodated therein, and
the discharge unit discharges what is accommodated in the first inner pouch and what is accommodated in the second inner pouch.

3. The pressure accumulation-type discharge product according to claim 1, wherein an amount of the foaming component mixed inside the first inner pouch is 8 times or less an amount of the nitrous oxide and/or the carbon dioxide dissolved to saturation in the first fluid food at an air temperature of 25°C and a pressure of 0.1 MPa.

4. The pressure accumulation-type discharge product according to claim 3, wherein the amount of the foaming component mixed inside the first inner pouch is 2 to 5 times the amount of the nitrous oxide and/or the carbon dioxide dissolved to saturation in the first fluid food at an air temperature of 25°C and a pressure of 0.1 MPa.

5. The pressure accumulation-type discharge product according to claim 1, wherein the first fluid food comprises an alcoholic beverage.

6. A method for producing a pressure accumulation-type discharge product for a foamed food, the discharge product comprising a first inner pouch having a first fluid food accommodated therein and a can having the first inner pouch accommodated therein, and the method comprising:
a step of accommodating a pressurized gas around the first inner pouch inside the can;
a step of accommodating the first fluid food in the first inner pouch; and
a step of accommodating a foaming component that is nitrous oxide and/or carbon dioxide after accommodating the first fluid food in the first inner pouch.

7. The production method according to claim 6, wherein the step of accommodating a foaming component is sending out an amount of the foaming component to be accommodated by using a cylinder to accommodate the same in the first inner pouch.

8. The production method according to claim 7, wherein the method comprises a step of shaking the can after accommodating the foaming component.
